# DEMANDE DE BREVET EUROPEEN

(11) **EP 1 645 472 A1**
(43) Date de publication de la demande: **12.04.2006**
(21) Numéro de dépôt: 05300799.3
(22) Date de dépôt: 06.10.2005
(51) Int. Cl.: B60R 5/04, B60R 7/02

(54) **dispositif de cloisonnement pour compartiment à bagages de véhicule automobile**

(30) Priorité: 07.10.2004 FR 0452288
(71) Demandeur: Peugeot Citroen Automobiles SA, 78943 Vélizy-Villacoublay Cedex (FR)
(72) Inventeur: Le Dall, Christophe, 92150, Suresnes (FR)
(74) Mandataire: Fernandez, Francis Lionel

(57) **Abrégé**

L'invention a pour objet un dispositif de cloisonnement du compartiment à bagages d'un véhicule automobile, du type comportant des parois dépliables (42, 44, 46, 48) pouvant prendre une position repliée lorsque le dispositif n'est pas utilisé et une position déployée permettant de cloisonner ledit compartiment.

Selon l'invention, les parois forment, en position déployée, un parallélépipède (40) dont les deux bases sont sensiblement parallèles au plancher du véhicule. Le dispositif comporte avantageusement quatre parois (42, 44, 46, 48), deux desdites parois (42, 44) formant en position déployée lesdites deux bases et les deux autres parois (46, 48) formant, en position déployée, deux faces latérales opposées du parallélépipède.

Application à l'industrie automobile.

## Description

La présente invention concerne un dispositif de cloisonnement pour le compartiment à bagages d'un véhicule automobile.

De nombreux dispositifs de cloisonnement ou de rangement d'un coffre d'automobile ont déjà été proposés pour s'assurer que les objets présents dans le coffre ne se déplacent pas et restent rangés. Lors de secousses violentes d'un véhicule équipé d'un hayon arrière, du type monospace par exemple, ou en cas d'accélération ou de décélération brutale, ou pire encore en cas de retournement du véhicule, des objets présents dans le coffre peuvent se disperser dans l'habitacle, blesser les passagers et créer des dommages matériels au véhicule.

Certains coffres sont alors munis d'un ou plusieurs filets permettant de maintenir les bagages sous le ou les filets. Ces filets sont relativement peu efficaces en termes de sécurité et ne permettent pas de ranger les bagages de façon ordonnée.

On a alors proposé des dispositifs de cloisonnement à l'aide de parois amovibles et/ou repliables. Ainsi, la demande de brevet français FR 2 789 029 (A1) décrit un dispositif de rangement comportant plusieurs parois qui, une fois dépliées, forment une ou plusieurs boites de rangement. Ces boites ont l'aspect de parallélépipèdes rectangles. Outre le fait que le déploiement et le repliement des parois ne sont pas des manoeuvres aisées, les boites sont sans fermeture sur le dessus. Il en découle, d'une part, que les objets placés dans les boites peuvent être visibles de l'extérieur du véhicule à travers la lunette arrière et, d'autre part, le déplacement des objets peut se produire en cas d'accident, notamment en cas de retournement du véhicule.

On connaît également par la demande de brevet européen EP1321335-A1 un tapis de véhicule dans lequel est intégré un dispositif de rangement. Des volets, pivotant entre une position horizontale escamotée et une position verticale dépliée, délimitent des zones de rangement lorsque les volets sont placés en position verticale. En position escamotée, la surface formée par la face supérieure du tapis et les volets est plane. Le déplacement des objets n'est limité que par le plancher et les volets latéraux. Les objets peuvent donc s'échapper en sortant par le haut des zones de rangement.

On connaît aussi par la demande de brevet européen EP0927663-B 1 un dispositif de cloisonnement modulaire de coffre de véhicule. Un panneau de plancher, amovible, peut prendre des positions variables dans la partie arrière du véhicule. Ce panneau est maintenu par des nervures réalisées dans le plancher et les parois latérales internes du coffre. Ce dispositif est particulièrement bien adapté aux véhicules découverts.

En plus des inconvénients déjà cités, les dispositifs de l'art antérieur sont onéreux à fabriquer.

La présente invention propose un dispositif de cloisonnement ne présentant pas les inconvénients de l'art antérieur. Le dispositif permet notamment de rendre invisible de l'extérieur du véhicule les objets rangés à l'intérieur du dispositif et d'éviter la dispersion des objets dans l'habitacle en cas de retournement du véhicule. Le dispositif peut également être utilisé sans manoeuvres compliquées, sans modifier la structure de l'habitacle et sans réduire le volume de chargement. Il permet par exemple, pour les véhicules du type monospace de laisser un espace suffisant pour loger éventuellement un siège dans la partie arrière du véhicule.

De façon plus précise, l'invention a pour objet un dispositif de cloisonnement du compartiment à bagages d'un véhicule automobile, du type comportant des parois dépliables pouvant prendre une position repliée lorsque le dispositif n'est pas utilisé et une position déployée permettant de cloisonner ledit compartiment.

Le dispositif est caractérisé en ce que les parois forment, en position déployée, un parallélépipède dont les deux bases sont sensiblement parallèles au plancher du véhicule.

Le dispositif comporte avantageusement au moins quatre parois, deux desdites parois formant les deux bases du parallélépipède et les deux autres parois formant, en position déployée, deux faces latérales opposées du parallélépipède.

Selon un mode de réalisation, l'une ou l'autre des deux parois latérales est, en position déployée, sensiblement adjacente et parallèle à l'une des parois latérales internes du compartiment à bagages.

Le dispositif comporte avantageusement des moyens de maintien de ladite face latérale adjacente qui coopèrent avec des moyens complémentaires fixés à ladite paroi latérale interne du compartiment à bagage.

Selon un mode de réalisation préféré, lesdites parois peuvent être déployées dans une première direction latérale de façon à former ledit parallélépipède dans une première partie du compartiment à bagages et dans une deuxième direction latérale, opposée à ladite première direction, de façon à former ledit parallélépipède dans une deuxième partie du compartiment à bagages.

La largeur dudit parallélépipède est choisie de préférence de façon à permettre l'installation d'un siège à côté dudit parallélépipède, dans la partie du compartiment à bagages non occupée par ledit parallélépipède, lorsque le véhicule est du type monospace.

Ledit parallélépipède est avantageusement un parallélépipède droit, tel qu'un parallélépipède rectangle.

Selon un mode de réalisation préféré, lesdites parois forment, en position repliée, un tapis pour ladite partie arrière, deux des quatre parois recouvrant les deux autres parois. Le tapis est de préférence amovible.

La surface externe desdites deux parois recouvrant les deux autres parois est avantageusement recouverte du même matériau que le matériau recouvrant le plancher du compartiment à bagages.

La surface interne des parois du parallélépipède et la surface externe non recouverte du même matériau que le matériau recouvrant le plancher du compartiment à bagages sont recouvertes d'un matériau peu salissant et facilement nettoyable.
D'autres caractéristiques et avantages de l'invention ressortiront de la description suivante, donnée uniquement à titre d'exemple et faite en référence aux dessins annexés sur lesquels :
- la figure 1 représente en perspective une vue de la partie arrière de l'intérieur d'un véhicule muni d'un dispositif conforme à l'invention, et
- les figures 2A, 2B et 2C montrent le dispositif de la figure 1 en position repliée (fig.2A), en position complètement dépliée (fig.2C) et en position intermédiaire (fig.2B).

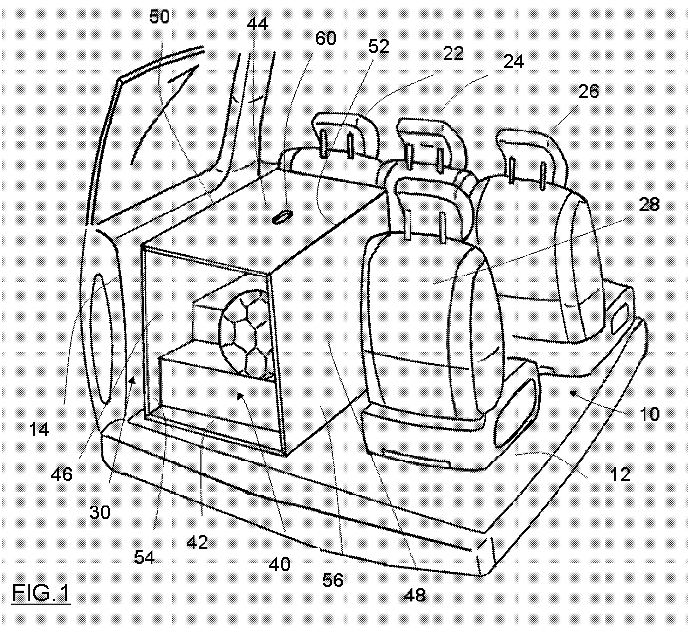

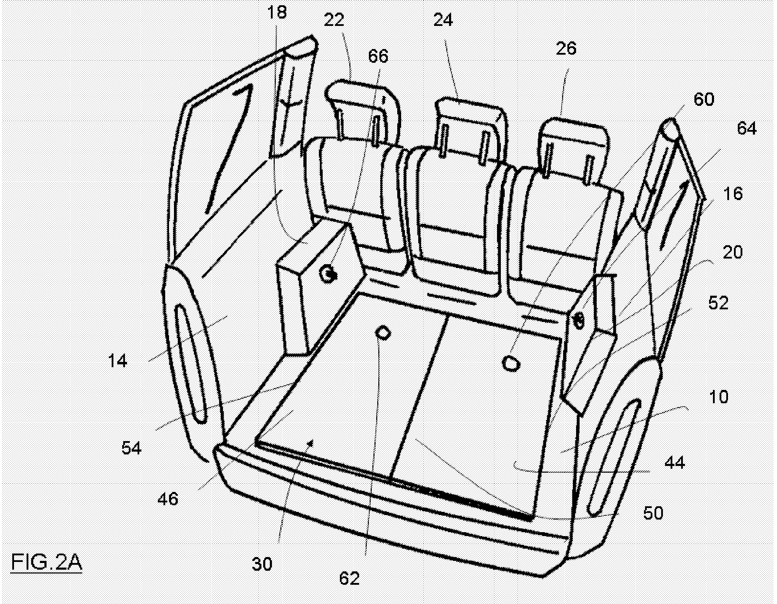

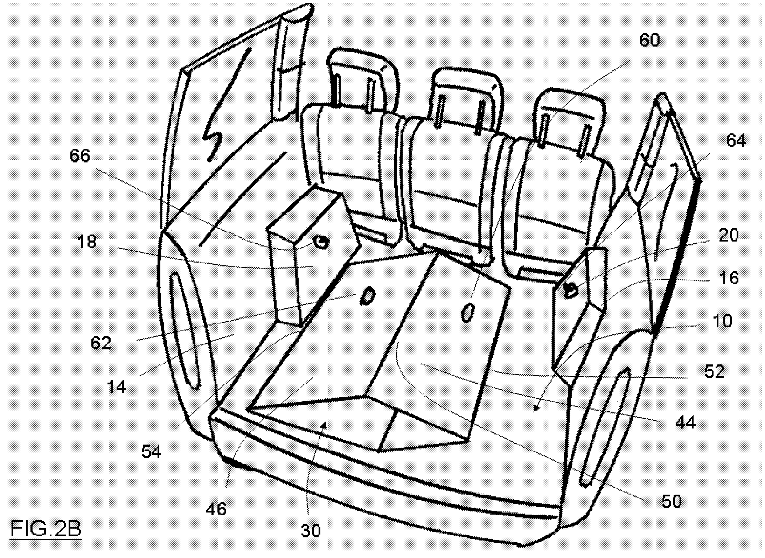

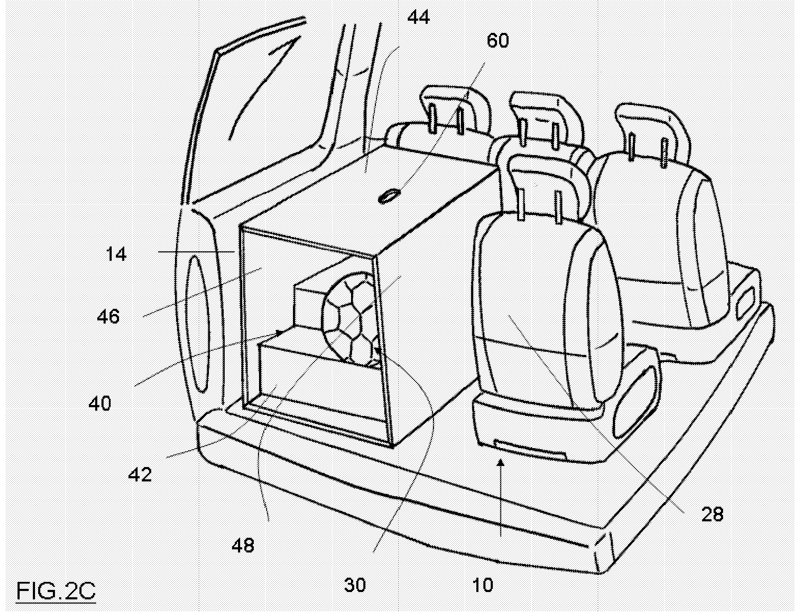

Les éléments communs aux deux figures 1 et 2 sont désignés par les mêmes numéros de référence.

La partie arrière du véhicule monospace montrée en perspective sur les figures 1 et 2 comporte un plancher 10 recouvert d'un tapis 12, une moquette par exemple, et deux parois latérales internes 14 et 16. Les passages de roues 18 et 20 sont visibles sur les figures 2A et 2B. L'espace arrière est délimité par le plancher 10, les parois latérales 14 et 16 et une rangée de trois sièges 22, 24 et 26, et par un hayon arrière (non représenté). Cet espace forme habituellement un compartiment à bagages mais il peut aussi, dans la plupart des véhicules du type monospace, être occupé en partie par un ou deux sièges supplémentaires, généralement amovibles. Les figures 1 et 2C montrent un siège 28 supplémentaire.

Le dispositif de cloisonnement 30 conforme à l'invention est formé de quatre parois rigides 42, 44, 46 et 48 de forme rectangulaire. En position déployé (figures 1 et 2C), le dispositif de cloisonnement forme un parallélépipède rectangle 40. Les parois inférieure 42 et supérieure 44 constituent les deux bases inférieure et supérieure du parallélépipède 40. Ces bases sont sensiblement parallèles au plancher 10, la base 42 reposant sur ce plancher. Les parois latérales 46 et 48 du dispositif de cloisonnement forment deux faces parallèles et opposées du parallélépipède 40.

Lorsqu'elle est déployée, la paroi latérale 46 est située à proximité immédiate de la paroi latérale interne 14 du compartiment à bagages et sensiblement parallèle à cette paroi latérale interne 14. La paroi 46 ne peut pas être plaquée contre la paroi interne 14 à cause du passage de roue 18. On pourrait cependant découper la paroi 46, la partie découpée épousant la forme du passage de roue 18, pour rapprocher la paroi 46 de la paroi interne 14.

Les parois du dispositif de cloisonnement sont solidaires entre elles par leurs bords latéraux communs qui forment les arêtes latérales du parallélépipède 40. Ainsi, la paroi 44 est montée solidairement aux parois 46 et 48 par leurs bords communs, respectivement 50 et 52 et la paroi 42 est montée solidairement aux parois 46 et 48 par leurs bords communs, respectivement 54 et 56. Les bords communs 50, 52, 54 et 56 forment chacun une charnière, ce qui permet de déployer et de replier le dispositif de cloisonnement. Tout type de charnière peut être employé. Par exemple, les parois 42, 44, 46 et 48 peuvent être constituées chacune d'une plaque rectangulaire en un matériau rigide, en bois ou en plastique par exemple, et les plaques reliées entre elles en recouvrant leurs bords d'une feuille en matériau souple, en laissant un espace entre les bords adjacents des plaques suffisant pour pouvoir replier le dispositif de cloisonnement.

Les figures 2 illustrent le déploiement du dispositif afin de cloisonner le compartiment à bagages. En position complètement repliée (fig.2A), les parois 44 et 46 recouvrent les parois 48 et 42. Le dispositif se réduit alors à un panneau à double épaisseur (l'épaisseur de deux parois superposées) qui est de préférence amovible et donc facilement transportable. Du fait de son encombrement réduit, le dispositif de cloisonnement peut également être laissé en permanence dans le compartiment à bagages. Le dispositif de cloisonnement replié peut occuper, comme représenté sur la figure 2A, la presque totalité de la surface du plancher 10 et constitué ainsi un tapis. Le dispositif peut bien entendu être de dimensions plus réduites.

Pour cloisonner le compartiment à bagages, et selon un premier mode de déploiement, on soulève les parois 44, 46 et 48 en laissant immobile la paroi inférieure 42. On effectue un mouvement vers le haut et latéral vers la gauche, comme illustré sur la figure 2B, de façon à amener la paroi latérale 46 vers la paroi interne 14 et à positionner le dispositif de cloisonnement dans la partie gauche du compartiment à bagages. Il est également possible, selon un deuxième mode de déploiement, d'effectuer un mouvement vers le haut et latéral vers la droite de façon à amener la paroi 44 vers la paroi interne 16, de façon à positionner le dispositif de cloisonnement dans la partie droite du compartiment à bagages.

Les parois 44 et 46 sont munies de moyens de maintien, respectivement 60 et 62 qui coopèrent avec des moyens complémentaires respectivement 64 et 66 fixés aux parois latérales internes respectivement 16 et 14 dudit compartiment à bagage. Les moyens de maintien 60 et 62 sont chacun constitués par un trou au travers duquel passe un taquet rotatif 64 ou 66, la rotation d'un quart de tour du taquet entraînant le verrouillage de la paroi 44 ou 46. Ces moyens de maintien et ces moyens complémentaires peuvent être réalisés différemment, par exemple être constitués par des bandes d'accrochage du type connu sous la marque Velcro, des clips, des boutons pressions, des crochets ou des lanières.

La figure 2C, identique à la figure 1, illustre le dispositif de cloisonnement en position complètement déployée, le compartiment à bagages étant alors compartimenté. La largeur des parois formant les bases inférieure et supérieure peut être choisie de façon à laisser libre un espace suffisant pour installer un siège supplémentaire 28 à coté du dispositif de cloisonnement déployé.

Les faces extérieures des parois 44 et 46 sont avantageusement recouvertes d'un matériau identique à celui recouvrant le plancher du compartiment à bagages, de la moquette par exemple. Les faces intérieures des parois 42, 44, 46 et 48, ainsi que les faces extérieures des parois 42 et 48 sont de préférence recouvertes d'un matériau peu salissant et facilement nettoyable.

Le mode de réalisation décrit concerne un dispositif amovible, indépendant du revêtement du plancher 10. L'homme du métier pourrait facilement concevoir le même dispositif mais fixé de façon permanente au plancher. Alternativement, les parois 42 et 48 pourraient faire partie intégrante du revêtement rigide du plancher, ces parois étant découpées dans le revêtement.

La forme particulière du dispositif qui a été décrite et illustrée sur les figures 1 et 2 est un parallélépipède droit et rectangle 40. De façon générale, on donne au dispositif la forme d'un parallélépipède s'adaptant le mieux à la forme du compartiment à bagages. Ainsi, le parallélépipède pourrait être à section carrée et non rectangulaire. De même, les faces latérales 46 et 48 ne sont pas nécessairement disposées à angle droit par rapport aux bases 42 et 44, ces faces latérales pouvant être inclinées par rapport aux bases.

Dans le mode de réalisation décrit, le dispositif de cloisonnement comporte quatre parois. On peut aisément concevoir qu'il puisse comporter une ou deux parois supplémentaires, l'une étant située à proximité du dos des sièges 22 à 26 pour fermer l'arrière du parallélépipède, dans le cas notamment où l'espace entre le dos des sièges et le dispositif est suffisamment important pour laisser s'échapper des objets, et l'autre étant à l'avant du dispositif de cloisonnement pour rendre invisibles les objets rangés dans le dispositif de cloisonnement lorsque le hayon arrière du véhicule est ouvert.

On remarque que le dispositif de cloisonnement comporte, en position déployée, une paroi supérieure 44 (dans l'exemple illustré sur les figures) ou 46 qui empêche, d'une part, que les objets contenus à l'intérieur du dispositif soient visibles de l'extérieur du véhicule et, d'autre part, que ces objets puissent s'échapper dans l'habitacle lors d'une secousse violente ou du renversement du véhicule.

Le dispositif de cloisonnement ne modifie pas la structure de l'habitacle et facile à réaliser. Cette solution est donc particulièrement bon marché. On remarque que le volume de chargement est conservé.

## Revendications

1. Dispositif de cloisonnement du compartiment à bagages d'un véhicule automobile, du type comportant des parois dépliables (42, 44, 46, 48) pouvant prendre une position repliée lorsque le dispositif n'est pas utilisé et une position déployée permettant de cloisonner ledit compartiment, **caractérisé en ce que** lesdites parois forment, en position déployée, un parallélépipède (40) dont les deux bases sont sensiblement parallèles au plancher du véhicule, deux desdites parois (42, 44) formant en position déployée lesdites deux bases et les deux autres parois (46, 48) formant, en position déployée, deux faces latérales opposées du parallélépipède.

2. Dispositif selon la revendication 1 **caractérisé en ce que** l'une ou l'autre des deux parois latérales (44 ou 46) est, en position déployée, sensiblement adjacente et parallèle à l'une des parois latérales internes (14 ou 16) du compartiment à bagages.

3. Dispositif selon la revendication 2 **caractérisé en ce qu'**il comporte des moyens de maintien (60, 62) de ladite paroi latérale adjacente coopérant avec des moyens complémentaires (64, 66) fixés à ladite paroi latérale interne (14, 16) dudit compartiment à bagage.

4. Dispositif selon la revendication 3 **caractérisé en ce que** lesdits moyens de maintien et lesdits moyens complémentaires sont choisis parmi des bandes d'accrochage du type connu sous la marque Velcro, des clips, des boutons pressions, des lanières, des crochets et des systèmes de verrouillage.

5. Dispositif selon l'une des revendications précédentes **caractérisé en ce que** lesdites parois peuvent être déployées dans une première direction latérale de façon à former ledit parallélépipède (40) dans une première partie du compartiment à bagages et dans une deuxième direction latérale, opposée à ladite première direction, de façon à former ledit parallélépipède dans une deuxième partie du compartiment à bagages.

6. Dispositif selon la revendication 5 **caractérisé en ce que** la largeur des parois (42, 44) formant les bases dudit parallélépipède est choisie de façon à permettre l'installation d'un siège (28) à côté dudit dispositif, dans la partie du compartiment à bagages non occupée par ledit dispositif, lorsque le véhicule est du type monospace.

7. Dispositif selon l'une des revendications précédentes **caractérisé en ce que** ledit parallélépipède (40) est un parallélépipède droit.

8. Dispositif selon la revendication 9 **caractérisé en ce que** ledit parallélépipède droit est un parallélépipède rectangle.

9. Dispositif selon l'une des revendications précédentes **caractérisé en ce que** lesdites parois forment, en position repliée, un tapis pour ladite partie arrière, deux (44, 46) des quatre parois recouvrant les deux autres parois.

10. Dispositif selon la revendication 9 **caractérisé en ce qu'**il est amovible.

11. Dispositif selon la revendication 9 **caractérisé en ce qu'**il est partiellement formé dans le revêtement (12) du plancher (10) du compartiment à bagages.

12. Dispositif selon l'une des revendications 9 à 11 **caractérisé en ce que** la surface externe desdites deux parois (44, 46) recouvrant les deux autres parois (42, 48) est recouverte du même matériau que le matériau recouvrant le plancher (10) du compartiment à bagages.

13. Dispositif selon l'une des revendications précédentes **caractérisé en ce que** la surface interne des parois du parallélépipède et les surfaces externes non recouvertes du même matériau que le matériau recouvrant le plancher du compartiment à bagages sont recouvertes d'un matériau peu salissant.
